# EUROPEAN PATENT APPLICATION

(11) **EP 4 309 513 A1**
(43) Date of publication of application: **24.01.2024**
(21) Application number: 21931670.0
(22) Date of filing: 24.09.2021
(51) Int. Cl.: A23L 27/00, A23L 27/20

(54) **POTASSIUM SEASONING**

(30) Priority: 19.03.2021 JP 2021045367
(71) Applicant: NISSIN FOODS HOLDINGS CO., LTD., Yodogawa-ku Osaka-shi, Osaka 532-8524 (JP)
(72) Inventor: NAKATANI, Taiga, Osaka-shi Osaka 532-8524 (JP); YAMAUCHI, Kohei, Osaka-shi Osaka 532-8524 (JP)
(74) Representative: Mewburn Ellis LLP
(86) International application number: PCT/JP2021/035107
(87) International publication number: WO 2022/195927

(57) **Abstract**

An object of the invention is to suppress an acrid taste characteristic of potassium while containing a high concentration of potassium. The present inventors found that an acrid taste of potassium can be suppressed by combining potassium ions with organic acid ions (gluconic acid ions, citric acid ions, and glutamic acid ions) at a particular ratio, thus completing the invention. That is, the invention relates to a potassium condiment composed of potassium ions, gluconic acid ions, citric acid ions, and glutamic acid ions, in which the potassium condiment includes 10% to 90% by weight of gluconic acid ions, 3% to 65% by weight of citric acid ions, and 7% to 85% by weight of glutamic acid ions in the total amount of organic acid ions consisting of gluconic acid ions, citric acid ions, and glutamic acid ions included in the potassium condiment.

## Description

### TECHNICAL FIELD

The present invention relates to a potassium condiment.

### BACKGROUND ART

Potassium is in charge of important roles in the living body, such as maintenance of intracellular osmotic pressure and water retention, and since potassium also has an effect of excreting sodium, attention has been paid even in terms of preventing hypertension.

According to the Dietary Reference Intakes for Japanese people (2020 edition), the potassium intake for a man aged 18 years or older is 2,500 mg/day (target 3,000 mg/day), while the potassium intake for a woman aged 18 years or older is 2,000 mg/day (target 2,600 mg/day), and many fortified foods have one-third of the amount of potassium required for a day (833 mg or more on the basis of a man aged 18 years or older) added therein.

However, potassium chloride, which is the cheapest and easily available potassium compound, has a strong odd taste (acrid taste), and the amount thereof that can be added is limited. Thus, a method of suppressing an acrid taste by adding a masking agent such as an amino acid or inosinic acid has been investigated. For example, Patent Document 1 discloses a method of combining potassium chloride with an amino acid or a salt thereof.

However, the flavor of conventional potassium-containing foods has not reached a level that satisfies consumers.

### CITATION LIST

### PATENT DOCUMENT

Patent Document 1: JP 2019-062778 A

### DISCLOSURE OF THE INVENTION

### PROBLEM TO BE SOLVED BY THE INVENTION

An object of the invention is to suppress an acrid taste characteristic of potassium even while containing a high concentration of potassium.

### MEANS FOR SOLVING PROBLEM

The inventors of the invention found that the acrid taste of potassium can be suppressed by combining potassium ion with organic acid ions (gluconic acid ion, citric acid ion, and glutamic acid ion) at a particular ratio, thus completing the invention.

That is, an embodiment relates to a potassium condiment composed of potassium ions, gluconic acid ions, citric acid ions, and glutamic acid ions, in which the potassium condiment includes 10% to 90% by weight of gluconic acid ions, 3% to 65% by weight of citric acid ions, and 7% to 85% by weight of glutamic acid ions in the total amount of organic acid ions consisting of the gluconic acid ions, citric acid ions, and glutamic acid ions included in the potassium condiment.

With regard to the above-described potassium condiment, it is preferable that the potassium condiment includes 30% to 90% by weight of gluconic acid ions, 3% to 50% by weight of citric acid ions, and 7% to 55% by weight of glutamic acid ions, in the total amount of organic acid ions.

With regard to the above-described potassium condiment, it is preferable that the potassium condiment includes 40% to 75% by weight of gluconic acid ions, 7% to 30% by weight of citric acid ions, and 10% to 40% by weight of glutamic acid ions, in the total amount of organic acid ions.

With regard to the above-described potassium condiment, it is preferable that the potassium condiment includes 170 parts by weight or more of organic acid ions with respect to 100 parts by weight of potassium ions.

### EFFECT OF THE INVENTION

According to the invention, a potassium condiment that can suppress an acrid taste characteristic of potassium even while containing a high concentration of potassium.

### BEST MODE(S) FOR CARRYING OUT THE INVENTION

Hereinafter, a potassium condiment according to embodiments of the invention will be specifically described.

An embodiment relates to a potassium condiment. The potassium condiment includes at least potassium ions, gluconic acid ions, citric acid ions, and glutamic acid ions. A potassium condiment with suppressed acrid taste of potassium can be obtained, by incorporating potassium ion and organic acid ions consisting of gluconic acid ion, citric acid ion, and glutamic acid ion.

Furthermore, the potassium condiment can be adjusted to fit in with various foods by adjusting the ratio of the organic acid ions. Specifically, when it is wished to strengthen a sweet taste, the ratio of gluconic acid ions is increased, whereas when it is wished to strengthen an umami taste, the ratio of glutamic acid ions is increased, and thereby the potassium condiment can be adjusted to an acrid taste suppressive agent appropriate for various foods. Furthermore, citric acid ion has a characteristic odd taste; however, when citric acid ion is added as tripotassium citrate, since the intramolecular potassium ratio is as high as 38.3%, it is effective for increasing the potassium ion concentration of the potassium condiment.

According to an embodiment, the potassium condiment includes 10% to 90% by weight of gluconic acid ions, 3% to 65% by weight of citric acid ions, and 7% to 85% by weight of glutamic acid ions in the total amount of organic acid ions consisting of gluconic acid ions, citric acid ions, and glutamic acid ions included in the potassium condiment. By setting the details of the organic acid ions to these ranges, the acrid taste of potassium can be suppressed.

Furthermore, in the total amount of the organic acid ions, it is preferable to set the proportion of gluconic acid ions to 30% to 90% by weight, the proportion of citric acid ions to 3% to 50% by weight, and the proportion of glutamic acid ions to 7% to 55% by weight, and it is extremely preferable to set the proportion of gluconic acid ions to 40% to 75% by weight, the proportion of citric acid ions to 7% to 30% by weight, and the proportion of glutamic acid ions to 10% to 40% by weight. By limiting the details of the organic acid ions to these ranges, not only the acrid taste of potassium but also the odd taste characteristic of the organic acid ions can be suppressed.

Here, the organic acid ions refer to gluconic acid ion, citric acid ion, and glutamic acid ion, and these are distinguished from other anions (chloride ion or acetic acid ion). Furthermore, the organic acid ions include compounds that can become the organic acid ions when dissolved in water. That is, for gluconic acid ions, potassium gluconate and gluconic acid; for citric acid ions, citric acid salts such as tripotassium citrate and dipotassium hydrogen citrate, hydrates thereof, and citric acid; and for glutamic acid ion, potassium glutamate, hydrate thereof, and glutamic acid, are included.

According to an embodiment, it is preferable that 170 parts by weight or more, and more preferably 200 parts by weight or more, of the organic acid ions are included with respect to 100 parts by weight of potassium ions. As the amount of the organic acid ions with respect to potassium ions is increased, the acrid taste of potassium ions becomes thinner, and the flavor is improved.

According to an embodiment, it is preferable to set the amount of the organic acid ions to 1000 parts by weight or less with respect to 100 parts by weight of potassium ion. When the organic acid ions are increased, the acrid taste of potassium becomes thinner; however, this contrasts the object of the invention to provide a condiment with a high concentration of potassium ions.

According to an embodiment, the potassium condiment can be combined with other materials. Specific examples include umami components such as inosinic acid, succinic acid, and aspartic acid; spices such as pepper, ginger, chili, and cumin; oils and fats such as lard, sesame oil, and rapeseed oil; saccharides such as glucose, fructose, trehalose, starch, and dextrin; condiment materials such flavors, coloring materials, and emulsifiers; and seasonings such as soy sauce, sake, sweet sake, soybean paste, bouillon, and oyster sauce. Incidentally, according to the invention, a seasoning obtained by combining the potassium condiment with other materials will be referred to as seasoning (potassium condiment-containing).

### Production method

The potassium condiment can be produced by various methods. For example, a potassium condiment including potassium ions, gluconic acid ions, citric acid ions, and glutamic acid ions can be produced by adding potassium hydroxide and/or potassium carbonate to an aqueous solution of organic acids consisting of gluconic acid, citric acid, and glutamic acid and neutralizing the mixture. Furthermore, the potassium condiment can also be produced by dissolving organic acid salts such as potassium gluconate, potassium citrate, and potassium glutamate in water.

Furthermore, these methods can also be combined. For example, a method of adding citric acid ions as potassium citrate and obtaining gluconic acid ions and glutamic acid ions by neutralization of an aqueous solution of organic acids, and the like may be considered.

### EXAMPLES

### (Trial Production Examples 1 to 36)

479 parts by weight of potassium gluconate, 26 parts by weight of tripotassium citrate, and 47 parts by weight of potassium glutamate were dissolved in 5000 parts by weight of water to produce Trial Production Example 1. In Trial Production Example 1, 453 parts by weight of organic acid ions (399 parts by weight of gluconic acid ions, 16 parts by weight of citric acid ions, and 37 parts by weight of glutamic acid ions) are included with respect to 100 parts by weight of potassium ions. Furthermore, the weight percent concentrations of gluconic acid ions, citric acid ions, and glutamic acid ions in the total amount of the organic acid ions are 88.2% for gluconic acid ions, 3.6% for citric acid ions, and 8.3% for glutamic acid ions, respectively.

The ratio of potassium gluconate, tripotassium citrate, and potassium glutamate was changed as shown in Table 1, and each of the combinations was dissolved in 5000 parts by weight of water to produce Trial Production Examples 2 to 36. Incidentally, the blending amount of potassium ions included in Trial Production Examples 1 to 36 was constant (100 parts by weight). By setting the blending amount of potassium ions to be constant, it was made easy to compare the acrid taste of each of the potassium condiments. Incidentally, in the following tables, particularly when there is no description of a unit, the unit is "parts by weight".

**[Table 1]**

| Table 1 | Potassium gluconate | Tripotassium citrate | Potassium glutamate | Sum of solid contents |
|---|---|---|---|---|
| Trial Production Example 1 | 479 | 26 | 47 | 553 |
| Trial Production Example 2 | 419 | 52 | 47 | 519 |
| Trial Production Example 3 | 419 | 26 | 95 | 540 |
| Trial Production Example 4 | 359 | 78 | 47 | 485 |
| Trial Production Example 5 | 359 | 52 | 95 | 506 |
| Trial Production Example 6 | 359 | 26 | 142 | 528 |
| Trial Production Example 7 | 300 | 104 | 47 | 451 |
| Trial Production Example 8 | 300 | 78 | 95 | 473 |
| Trial Production Example 9 | 300 | 52 | 142 | 494 |
| Trial Production Example 10 | 300 | 26 | 189 | 515 |
| Trial Production Example 11 | 240 | 131 | 47 | 418 |
| Trial Production Example 12 | 240 | 104 | 95 | 439 |
| Trial Production Example 13 | 240 | 78 | 142 | 460 |
| Trial Production Example 14 | 240 | 52 | 189 | 481 |
| Trial Production Example 15 | 240 | 26 | 237 | 503 |
| Trial Production Example 16 | 180 | 157 | 47 | 384 |
| Trial Production Example 17 | 180 | 131 | 95 | 405 |
| Trial Production Example 18 | 180 | 104 | 142 | 426 |
| Trial Production Example 19 | 180 | 78 | 189 | 448 |
| Trial Production Example 20 | 180 | 52 | 237 | 469 |
| Trial Production Example 21 | 180 | 26 | 284 | 490 |
| Trial Production Example 22 | 120 | 183 | 47 | 350 |
| Trial Production Example 23 | 120 | 157 | 95 | 371 |
| Trial Production Example 24 | 120 | 131 | 142 | 393 |
| Trial Production Example 25 | 120 | 104 | 189 | 414 |
| Trial Production Example 26 | 120 | 78 | 237 | 435 |
| Trial Production Example 27 | 120 | 52 | 284 | 456 |
| Trial Production Example 28 | 120 | 26 | 332 | 478 |
| Trial Production Example 29 | 60 | 209 | 47 | 316 |
| Trial Production Example 30 | 60 | 183 | 95 | 338 |
| Trial Production Example 31 | 60 | 157 | 142 | 359 |
| Trial Production Example 32 | 60 | 131 | 189 | 380 |
| Trial Production Example 33 | 60 | 104 | 237 | 401 |
| Trial Production Example 34 | 60 | 78 | 284 | 423 |
| Trial Production Example 35 | 60 | 52 | 332 | 444 |
| Trial Production Example 36 | 60 | 26 | 379 | 465 |

The amounts (parts by weight) of the organic acid ions and potassium ions included in Trial Production Examples 1 to 36, and the weight percent concentrations of gluconic acid ions, citric acid ions, and glutamic acid ions (indicated as "Details of organic acid ions" in Table 2) in the total amount of the organic acid ions are as described in Table 3.

### (Trial Production Examples A to I)

559 parts by weight of potassium gluconate was dissolved in 5000 parts by weight of water to produce Trial Production Example A. In Trial Production Example A, 499 parts by weight of organic acid ions (gluconic acid ions) are included with respect to about 100 parts by weight of potassium ions. Furthermore, the amounts of the organic acid ions and potassium ions included in Trial Production Examples A to I and the weight percent concentrations of gluconic acid ions, citric acid ions, and glutamic acid ions in the total amount of the organic acid ions are 100% for gluconic acid ions, 0% for citric acid ions, and 0% for glutamic acid ions.

The ratio of potassium gluconate, tripotassium citrate, and potassium glutamate was changed as shown in Table 2, and each of the combinations was dissolved in 5000 parts by weight of water to produce Trial Production Examples B to I. The amounts of the organic acid ions and potassium ions included in Trial Production Examples A to I, and the weight percent concentrations of gluconic acid ions, citric acid ions, and glutamic acid ions in the total amount of the organic acid ions are as described in Table 4.

**[Table 2]**

| Table 2 | Potassium gluconate | Tripotassium citrate | Potassium glutamate | Sum of solid contents |
|---|---|---|---|---|
| Trial Production Example A | 599 | 0 | 0 | 599 |
| Trial Production Example B | 0 | 261 | 0 | 261 |
| Trial Production Example C | 0 | 0 | 474 | 474 |
| Trial Production Example D | 300 | 131 | 0 | 430 |
| Trial Production Example E | 0 | 131 | 237 | 367 |
| Trial Production Example F | 300 | 0 | 237 | 536 |
| Trial Production Example G | 539 | 13 | 24 | 576 |
| Trial Production Example H | 30 | 235 | 24 | 289 |
| Trial Production Example I | 30 | 13 | 426 | 469 |

### (Trial Production Example J)

Furthermore, 191 parts by weight of potassium chloride (100 parts of potassium ions) was dissolved in 5000 parts by weight of water to produce Trial Production Example J. Incidentally, in Trial Production Example J, organic acid ions were not included.

### (Evaluation)

The acrid tastes of the potassium condiments were evaluated on the basis of Trial Production Example J (defective), Trial Production Example C (conventional level), and Trial Production Example 24 (satisfactory). Incidentally, Trial Production Example J was considered as a defective standard because a potassium compound for food applications that has a strong acrid taste and is most easily available is used. Furthermore, Trial Production Example C was considered as a conventional level standard because potassium glutamate is known as a potassium having a relatively weak acrid taste. Trial Production Example 24 was considered as a satisfactory standard because the acrid taste is weak, and the ratio of gluconic acid ions, citric acid ions, and glutamic acid ions is at the same level (approximately 30%). The evaluation results are as shown in Tables 3 and 4.
⊙ (highly satisfactory): Having a weaker acrid taste than Trial Production Example 24.
○ (satisfactory): At the same level as Trial Production Example 24.
△ (ordinary): Inferior to Trial Production Example 24 but in an acceptable range.
▲ (conventional level): The acrid taste is weaker than Trial Production Example J; however, the acrid taste is stronger compared to Trial Production Example 24 (at the same level as Trial Production Example C).
× (defective): The acrid taste is strong at the same level as or higher than Trial Production Example J.

**[Table 3]**

| Table 3 | Gluconic acid ion | Citric acid ion | Glutamic acid ion | Sum of organic acid ions | Potassium ion | Details of organic acid ions | | | Evaluation |
|---|---|---|---|---|---|---|---|---|---|
| | | | | | | Gluconic acid ion | Citric acid ion | Glutamic acid ion | Acrid taste |
| Trial Production Example 1 | 399 | 16 | 37 | 453 | 100 | 88.2% | 3.6% | 8.3% | ○ |
| Trial Production Example 2 | 349 | 32 | 37 | 419 | 100 | 83.4% | 7.7% | 8.9% | ○ |
| Trial Production Example 3 | 349 | 16 | 75 | 440 | 100 | 79.4% | 3.7% | 17.0% | ○ |
| Trial Production Example 4 | 299 | 48 | 37 | 385 | 100 | 77.7% | 12.6% | 9.7% | ○ |
| Trial Production Example 5 | 299 | 32 | 75 | 406 | 100 | 73.7% | 7.9% | 18.4% | ⊙ |
| Trial Production Example 6 | 299 | 16 | 112 | 428 | 100 | 70.0% | 3.8% | 26.2% | △ |
| Trial Production Example 7 | 250 | 64 | 37 | 351 | 100 | 71.0% | 18.4% | 10.6% | ○ |
| Trial Production Example 8 | 250 | 48 | 75 | 373 | 100 | 67.0% | 13.0% | 20.1% | ⊙ |
| Trial Production Example 9 | 250 | 32 | 112 | 394 | 100 | 63.4% | 8.2% | 28.5% | ⊙ |
| Trial Production Example 10 | 250 | 16 | 149 | 415 | 100 | 60.1% | 3.9% | 36.0% | △ |
| Trial Production Example 11 | 200 | 81 | 37 | 318 | 100 | 62.9% | 25.4% | 11.8% | ⊙ |
| Trial Production Example 12 | 200 | 64 | 75 | 339 | 100 | 58.9% | 19.0% | 22.1% | ⊙ |
| Trial Production Example 13 | 200 | 48 | 112 | 360 | 100 | 55.4% | 13.4% | 31.1% | ⊙ |
| Trial Production Example 14 | 200 | 32 | 149 | 381 | 100 | 52.4% | 8.5% | 39.2% | ⊙ |
| Trial Production Example 15 | 200 | 16 | 187 | 403 | 100 | 49.6% | 4.0% | 46.4% | △ |
| Trial Production Example 16 | 150 | 97 | 37 | 284 | 100 | 52.8% | 34.1% | 13.2% | ○ |
| Trial Production Example 17 | 150 | 81 | 75 | 305 | 100 | 49.1% | 26.4% | 24.5% | ⊙ |
| Trial Production Example 18 | 150 | 64 | 112 | 326 | 100 | 45.9% | 19.8% | 34.4% | ⊙ |
| Trial Production Example 19 | 150 | 48 | 149 | 348 | 100 | 43.1% | 13.9% | 43.0% | ○ |
| Trial Production Example 20 | 150 | 32 | 187 | 369 | 100 | 40.6% | 8.7% | 50.7% | ○ |
| Trial Production Example 21 | 150 | 16 | 224 | 390 | 100 | 38.4% | 4.1% | 57.5% | △ |
| Trial Production Example 22 | 100 | 113 | 37 | 250 | 100 | 39.9% | 45.1% | 14.9% | ○ |
| Trial Production Example 23 | 100 | 97 | 75 | 271 | 100 | 36.8% | 35.7% | 27.5% | ○ |
| Trial Production Example 24 | 100 | 81 | 112 | 293 | 100 | 34.1% | 27.6% | 38.3% | ○ |
| Trial Production Example 25 | 100 | 64 | 149 | 314 | 100 | 31.8% | 20.6% | 47.6% | ○ |
| Trial Production Example 26 | 100 | 48 | 187 | 335 | 100 | 29.8% | 14.4% | 55.8% | △ |
| Trial Production Example 27 | 100 | 32 | 224 | 356 | 100 | 28.0% | 9.1% | 62.9% | △ |
| Trial Production Example 28 | 100 | 16 | 262 | 378 | 100 | 26.4% | 4.3% | 69.3% | △ |
| Trial Production Example 29 | 50 | 129 | 37 | 216 | 100 | 23.1% | 59.6% | 17.3% | △ |
| Trial Production Example 30 | 50 | 113 | 75 | 238 | 100 | 21.0% | 47.5% | 31.5% | △ |
| Trial Production Example 31 | 50 | 97 | 112 | 259 | 100 | 19.3% | 37.4% | 43.3% | △ |
| Trial Production Example 32 | 50 | 81 | 149 | 280 | 100 | 17.8% | 28.8% | 53.4% | △ |
| Trial Production Example 33 | 50 | 64 | 187 | 301 | 100 | 16.6% | 21.4% | 62.0% | △ |
| Trial Production Example 34 | 50 | 48 | 224 | 323 | 100 | 15.5% | 15.0% | 69.5% | △ |
| Trial Production Example 35 | 50 | 32 | 262 | 344 | 100 | 14.5% | 9.4% | 76.1% | △ |
| Trial Production Example 36 | 50 | 16 | 299 | 365 | 100 | 13.7% | 4.4% | 81.9% | △ |

**[Table 4]**

| Table 4 | Gluconic acid ion | Citric acid ion | Glutamic acid ion | Sum of organic acid ions | Potassium ion | Details of organic acid ions | | | Evaluation |
|---|---|---|---|---|---|---|---|---|---|
| | | | | | | Gluconic acid ion | Citric acid ion | Glutamic acid ion | Acrid taste |
| Trial Production Example A | 499 | 0 | 0 | 499 | 100 | 100.0% | 0.0% | 0.0% | × |
| Trial Production Example B | 0 | 161 | 0 | 161 | 100 | 0.0% | 100.0% | 0.0% | × |
| Trial Production Example C | 0 | 0 | 374 | 374 | 100 | 0.0% | 0.0% | 100.0% | × |
| Trial Production Example D | 250 | 81 | 0 | 330 | 100 | 75.6% | 24.4% | 0.0% | × |
| Trial Production Example E | 0 | 81 | 187 | 267 | 100 | 0.0% | 30.1% | 69.9% | ▲ |
| Trial Production Example F | 250 | 0 | 187 | 436 | 100 | 57.2% | 0.0% | 42.8% | ▲ |
| Trial Production Example G | 449 | 8 | 19 | 476 | 100 | 94.4% | 1.7% | 3.9% | × |
| Trial Production Example H | 25 | 145 | 19 | 189 | 100 | 13.2% | 76.9% | 9.9% | × |
| Trial Production Example I | 25 | 8 | 336 | 369 | 100 | 6.8% | 2.2% | 91.1% | A |

### (Trial Production Example 37)

38 parts by weight of potassium chloride, 96 parts by weight of potassium gluconate, 104 parts by weight of tripotassium citrate, and 114 parts by weight of potassium glutamate were dissolved in 5000 parts by weight of water to produce Trial Production Example 37. In Trial Production Example 37, 234 parts by weight of organic acid ions (80 parts by weight of gluconic acid ions, 64 parts by weight of citric acid ions, and 90 parts by weight of glutamic acid ions) are included with respect to 100 parts by weight of potassium ions.

### (Trial Production Example 38)

76 parts by weight of potassium chloride, 72 parts by weight of potassium gluconate, 78 parts by weight of tripotassium citrate, and 85 parts by weight of potassium glutamate were dissolved in 5000 parts by weight of water to produce Trial Production Example 38. In Trial Production Example 38, 176 parts by weight of organic acid ions (60 parts by weight of gluconic acid ions, 48 parts by weight of citric acid ions, and 67 parts by weight of glutamic acid ions) are included with respect to 100 parts by weight of potassium ions.

### (Trial Production Example K)

95 parts by weight of potassium chloride, 60 parts by weight of potassium gluconate, 65 parts by weight of tripotassium citrate, and 71 parts by weight of potassium glutamate were dissolved in 5000 parts by weight of water to produce Trial Production Example K. In Trial Production Example K, 146 parts by weight of organic acid ions (50 parts by weight of gluconic acid ions, 40 parts by weight of citric acid ions, and 56 parts by weight of glutamic acid ions) are included with respect to 100 parts by weight of potassium ions.

The compositions of Trail Production Examples 37, 38, and K are as described in Tables 6 to 8. Furthermore, for a comparison, the composition of Trial Production Example 24 is shown in Table 5.

**[Table 5]**

| Table 5 (Trial Production Example 24) | Potassium chloride | Potassium gluconate | Tripotassium citrate | Potassium glutamate | Sum |
|---|---|---|---|---|---|
| Sum of potassium condiment solid contents | 0 | 120 | 131 | 142 | 393 |
| Potassium ion | 0 | 20 | 50 | 30 | 100 |
| Sum of organic acid ions | 0 | 100 | 81 | 112 | 293 |

**[Table 6]**

| Table 6 (Trial Production Example 37) | Potassium chloride | Potassium gluconate | Tripotassium citrate | Potassium glutamate | Sum |
|---|---|---|---|---|---|
| Sum of potassium condiment solid contents | 38 | 96 | 104 | 114 | 352 |
| Potassium ion | 20 | 16 | 40 | 24 | 100 |
| Sum of organic acid ions | 0 | 80 | 64 | 90 | 234 |

**[Table 7]**

| Table 7 (Trial Production Example 38) | Potassium chloride | Potassium gluconate | Tripotassium citrate | Potassium glutamate | Sum |
|---|---|---|---|---|---|
| Sum of potassium condiment solid contents | 76 | 72 | 78 | 85 | 312 |
| Potassium ion | 40 | 12 | 30 | 18 | 100 |
| Sum of organic acid ions | 0 | 60 | 48 | 67 | 176 |

**[Table 8]**

| Table 8 (Trial Production Example K) | Potassium chloride | Potassium gluconate | Tripotassium citrate | Potassium glutamate | Sum |
|---|---|---|---|---|---|
| Sum of potassium condiment solid contents | 95 | 60 | 65 | 71 | 292 |
| Potassium ion | 50 | 10 | 25 | 15 | 100 |
| Sum of organic acid ions | 0 | 50 | 40 | 56 | 146 |

For Trial Production Examples 24, 37, 38, J, and K, the acrid tastes were compared. As a result, Trial Production Example 37 (organic acid ions / potassium ions = 2.34) was satisfactory, Trial Production Example 38 (organic acid ions / potassium ions = 1.76) was ordinary, and Trial Production Example K (organic acid ions / potassium ions = 1.46) was defective. Separately, a more detailed verification was conducted, and as a result, it was confirmed that when the amount of the organic acid ions was less than 1.7 times the amount of potassium ions, the effect of masking an acrid taste was lost, whereas when the amount of the organic acid ions was 2.0 or more times the amount of potassium ions, the effect of masking an acrid taste tended to be enhanced.

## Claims

1. A potassium condiment comprising potassium ions, gluconic acid ions, citric acid ions, and glutamic acid ions,
wherein the potassium condiment includes 10% to 90% by weight of gluconic acid ions, 3% to 65% by weight of citric acid ions, and 7% to 85% by weight of glutamic acid ions in a total amount of organic acid ions consisting of gluconic acid ions, citric acid ions, and glutamic acid ions included in the potassium condiment.

2. A potassium condiment comprising 30% to 90% by weight of gluconic acid ions, 3% to 50% by weight of citric acid ions, and 7% to 55% by weight of glutamic acid ions in a total amount of organic acid ions.

3. A potassium condiment comprising 40% to 75% by weight of gluconic acid ions, 7% to 30% by weight of citric acid ions, and 10% to 40% by weight of glutamic acid ions in a total amount of organic acid ions.

4. The potassium condiment according to any one of claims 1 to 3, wherein the potassium condiment includes 170 parts by weight or more of the organic acid ions with respect to 100 parts by weight of potassium ions.
